# EUROPÄISCHE PATENTANMELDUNG

(11) **EP 1 245 144 A1**
(43) Veröffentlichungstag der Anmeldung: **02.10.2002**
(21) Anmeldenummer: 02003145.6
(22) Anmeldetag: 14.02.2002
(51) Int. Cl.: A01G 1/06, A01G 7/06, A01N 65/00

(54) **Verfahren zur Immunisierung von Apfelbaümen gegen Apfeltriebsucht**

(30) Priorität: 27.03.2001 DE 10115193
(71) Anmelder: Kotte, Gerd, 74081 Heilbronn-Horkheim (DE)
(72) Erfinder: Kotte, Gerd, 74081 Heilbronn-Horkheim (DE)
(74) Vertreter: Schneider, Michael, Dr.

(57) **Zusammenfassung**

Die Erfindung betrifft ein Verfahren zur Immunisierung von Apfelbäumen gegen Apfeltriebsucht, bei dem eine Unterlage mit einem Zwischenstamm als untere Veredelung veredelt wird und eine Edelsorte als obere Veredelung auf die veredelte Unterlage gesetzt wird, wobei als Zwischenstamm eine Sorte verwendet wird, die das Aufsteigen von Mycoplasmen in darüberliegende Stammbereiche verhindert.

## Beschreibung

Die Erfindung betrifft ein Verfahren zur Immunisierung von Apfelbäumen gegen Apfeltriebsucht, bei dem eine Unterlage mit einem Zwischenstamm als untere Veredelung veredelt wird und eine Edelsorte als obere Veredelung auf die veredelte Unterlage gesetzt wird.

Apfeltriebsucht ist eine Krankheit, die Apfelbäume befällt. Sie trat verstärkt zunächst in den 1950er Jahren in Italien, danach auch in den Niederlanden, der Schweiz und Süddeutschland auf. Bis Mitte der 70er Jahre war der Befall auf bis zu 70 % gestiegen. Symptome der Krankheit sind sog. "Hexenbesen", vergrößerte, gezahnte Nebenblätter sowie Kleinfrüchtigkeit, die die Früchte der Apfelbäume nicht verwertbar macht. Außerdem führt Apfeltriebsucht zu einer Rotlaubigkeit sowie einer erhöhten Mehltauanfälligkeit. Darüber hinaus gibt es keinen Triebabschluß im Herbst sowie Nachblüher.

Anfällige Sorten sind unter anderem Alkmene, Boskoop, Berlepsch, Cox, Elstar, Goldparmäne, Golden Delicious, Jonagold, Rubinette, Galla und Breabourne.

Die Übertragung der Krankheit geschieht über Edelreiser und Unterlagen, Wurzelverwachsungen sowie Zikaden und Blattsauger.

Eine Bekämpfung der Krankheit war bislang nicht möglich. Alle befallenen Apfelbäume mußten deshalb sofort vernichtet werden.

Außerdem sind Verfahren zur Veredelung von Apfelbäumen bekannt, bei denen auf einer Unterlage, auch Wildling oder Wurzel genannt, die sich im Boden befindet, knapp über dem Boden eine andere Sorte einveredelt wird. Üblicherweise wird hier eine Edelsorte, wie z. B. Elstar, Jonagold, Golden Delicious etc. verwendet.

Zur Erreichung bestimmter Eigenschaften kann auf der Unterlage auch eine Sorte als sog. Zwischenstamm einveredelt werden, auf die dann eine weitere Sorte aufgesetzt wird, vgl. z.B. Krüssmann, Die Baumschule, 1954, S.95. Üblicherweise werden hier frostresistente oder wachstumshemmende Eigenschaften bevorzugt oder extrem fruchtbare Sorten gewählt, damit diese Eigenschaft auf die darüber liegende zweite Sorte übertragen wird. Die zweite Veredelung erfolgt dann auf der Grundlage des Zwischenstamms wie bereits oben beschrieben mit einer Edelsorte.

Es ist Aufgabe der Erfindung, Apfelbäume gegen Triebsucht zu immunisieren.

Erfindungsgemäß wird diese Aufgabe durch ein Verfahren zur Immunisierung von Apfelbäumen gegen Apfeltriebsucht gelöst, bei dem eine Unterlage mit einem Zwischenstamm als untere Veredelung veredelt wird und eine Edelsorte als obere Veredelung auf die veredelte Unterlage gesetzt wird. Das erfindungsgemäße Verfahren ist dadurch gekennzeichnet, daß als Zwischenstamm eine Sorte verwendet wird, die das Aufsteigen von Mycoplasmen in darüberliegende Stammbereiche verhindert.

Nach einer bevorzugten Ausführungsform der Erfindung wird als Zwischenstamm die Sorte Lord Lambourne oder eine davon abstammende Nachzüchtung oder Kreuzung verwendet. Es ist klar, das auch gentechnisch manipulierte Sorten bzw. allgemein gentechnisch manipulierte Pflanzen, die nicht notwendigerweise die Definition einer Sorte im Sinne des "UPOV"-Übereinkommens (Internationales Übereinkommen zum Schutz von Pflanzenzüchtungen) erfüllen müssen, geeignet sind, solange diese die Mycoplasmenmigration verhindern können.

Überraschend ist festgestellt worden, daß bei einer Veredelung von Apfelbäumen mit einem Zwischenstamm einer Sorte, die das Aufsteigen von Mycoplasmen in darüberliegende Stammbereiche verhindert, beispielsweise der Sorte Lord Lambourne, eine weitgehende Immunisierung der Apfelbäume gegen Apfeltriebsucht erzielt wird.

Dabei wird auf einer üblichen Unterlage für Apfelbäume ein Zwischenstamm einer Sorte, die das Aufsteigen von Mycoplasmen in darüberliegende Stammbereiche verhindert, beispielsweise der Sorte Lord Lambourne, als untere Veredelung veredelt. Geeignete Veredelungstechniken sind dem Fachmann bekannt und werden von ihm nach Maßgabe der praktischen Gegebenheiten ausgewählt. Als Beispiele seien hier ohne Beschränkung genannt Okulation, Spaltpfropfen, Kopulation oder Geißfußveredelung. Der Zwischenstamm hat vorzugsweise eine Länge von 20 bis 30 cm. Darauf kann als zweite Veredelung die übliche Edelsorte veredelt werden, vorzugsweise Alkmene, Boskoop, Berlepsch, Cox, Elstar, Goldparmäne, Golden Delicious, Jonagold, Rubinette, Galla oder Breabourne etc.

## Patentansprüche

1. Verfahren zur Immunisierung von Apfelbäumen gegen Apfeltriebsucht, bei dem eine Unterlage mit einem Zwischenstamm als untere Veredelung veredelt wird und eine Edelsorte als obere Veredelung auf die veredelte Unterlage gesetzt wird, **dadurch gekennzeichnet, daß** als Zwischenstamm eine Sorte verwendet wird, die das Aufsteigen von Mycoplasmen in darüberliegende Stammbereiche verhindert.

2. Verfahren nach Anspruch 1, **dadurch gekennzeichnet, daß** als Zwischenstamm die Sorte Lord Lambourne oder eine davon abstammende Nachzüchtung oder Kreuzung verwendet wird.

3. Verfahren nach einem der vorstehenden Ansprüche, **dadurch gekennzeichnet, daß** ein Zwischenstamm von 20 bis 30 cm Länge verwendet wird.
